# EUROPEAN PATENT APPLICATION

(11) **EP 4 653 943 A1**
(43) Date of publication of application: **26.11.2025**
(21) Application number: 24744865.7
(22) Date of filing: 17.01.2024
(51) Int. Cl.: G02F 1/1339, G02F 1/1337, G02F 1/139, G02F 1/1335, B32B 7/023, B60J 3/04, G06F 1/16, E06B 9/24

(54) **TRANSMITTANCE-VARIABLE OPTICAL LAMINATE AND MANUFACTURING METHOD THEREFOR, AND SMART WINDOW COMPRISING SAME**

(30) Priority: 18.01.2023 KR 20230007604
(71) Applicant: Dongwoo Fine-Chem Co., Ltd., Iksan-si, Jeollabuk-do 54631 (KR)
(72) Inventor: AHN, Hong-Jun, Iksan-si, Jeonbuk-do 54631 (KR)
(74) Representative: Betten & Resch
(86) International application number: PCT/KR2024/000800
(87) International publication number: WO 2024/155085

(57) **Abstract**

The present disclosure relates to a transmittance variable optical laminate including: a first laminate in which a first polarizing plate including a first hard coating layer, a first transparent conductive layer, and a first alignment film are laminated in that order; a second laminate in which a second polarizing plate including a second hard coating layer, a second transparent conductive layer, and a second alignment film are laminated in that order; and a liquid crystal layer disposed between the first alignment film and the second alignment film, wherein at least one transparent conductive layer of the first transparent conductive layer and the second transparent conductive layer is formed in direct contact with one polarizing plate of the first polarizing plate and the second polarizing plate, and includes ball spacers embedded and fixed in at least one hard coating layer of the first hard coating layer and the second hard coating layer so as to maintain a gap between layers existing above and below the liquid crystal layer, the diameter (A) of the ball spacers is 3 to 14 µm, the hard coating layer having the ball spacers embedded therein has a thickness (B) of 1 to 10 µm, and (A)-(B) has a value of 2 to 10 µm, a method for manufacturing the same, a smart window including the same, and a means of transportation, an automobile, a wearable device, and a building window to which the same is applied.

## Description

### [Technical Field]

The present disclosure relates to a transmittance variable optical laminate, a method for producing the same, and a smart window including the same.

### [Background Art]

In general, there are many cases where external light blocking coatings are applied to the windows of means of transportation such as vehicles, etc. However, the windows of conventional means of transportation have fixed transmittance, and the external light blocking coatings also have fixed transmittance. Therefore, the windows of such conventional means of transportation have fixed overall transmittance, which may cause accidents. For example, if the overall transmittance is set low, there is no problem during the day when ambient light is sufficient, but there is a problem in that drivers and others may have difficulty properly checking the surroundings of the means of transportation at night when there is not enough light around. Alternatively, if the overall transmittance is set high, there is a problem in that drivers and others may be dazzled during the day when ambient light is insufficient. Accordingly, a transmittance variable optical laminate that can change the transmittance of light when voltage is applied has been developed.

The transmittance variable optical laminate is driven by varying the transmittance by driving the liquid crystal according to the voltage application, and the transmittance variable optical laminates developed to date are manufactured by forming a conductive layer for driving the liquid crystal on a separate substrate and then combining this with other elements such as a polarizing plate.

Korean Patent Application Publication No. 10-2017-0072573 relates to an invention regarding a liquid crystal window for an optical element and an optical element, and discloses a laminate that includes a liquid crystal layer whose transmittance changes depending on whether an external action (external force) is applied or not, and can minimize the flow of the spacers by fixing portions of spacers to one of the alignment films located on both surfaces of the liquid crystal layer. However, in this case, damage to the alignment film may be caused while the spacers embedded in the alignment film are being pushed, and the problem that optical performance may be deteriorated has not been resolved since defects are occurred due to light leakage caused by the above cause.

Therefore, in the transmittance variable laminate, it is necessary to develop a transmittance variable optical laminate that can maintain a constant optical color in the plane and minimize liquid crystal defects by minimizing the current short of the laminate while uniformly maintaining the cell gap of the liquid crystal.

### [Disclosure]

### [Technical Problem]

The present disclosure aims to provide a transmittance variable optical laminate in which the spacers are fixed in a form that they are embedded in one of the first hard coating layer and the second hard coating layer to minimize the movement of the spacers in order to solve the above problems.

Further, the present disclosure aims to provide a transmittance variable optical laminate in which the appearance and/or liquid crystal color of the transmittance variable optical laminate are uniformly formed and thus the optical properties are excellent.

Further, the present disclosure aims to provide a transmittance variable optical laminate in which the production process is simplified by not including a separate substrate for forming a conductive layer.

Further, the present disclosure aims to provide a smart window including the transmittance variable optical laminate and an automobile or building window to which the same is applied.

However, the problems to be solved by the present disclosure are not limited to the problems mentioned above, and other problems not mentioned will be clearly understood by those skilled in the art from the description below.

### [Technical Solution]

The present disclosure relates to a transmittance variable optical laminate including: a first laminate in which a first polarizing plate including a first hard coating layer, a first transparent conductive layer, and a first alignment film are laminated in that order; a second laminate in which a second polarizing plate including a second hard coating layer, a second transparent conductive layer, and a second alignment film are laminated in that order; and a liquid crystal layer disposed between the first alignment film and the second alignment film, wherein at least one transparent conductive layer of the first transparent conductive layer and the second transparent conductive layer is formed in direct contact with one polarizing plate of the first polarizing plate and the second polarizing plate, and includes ball spacers embedded in at least one hard coating layer of the first hard coating layer and the second hard coating layer so as to maintain a gap between layers existing above and below the liquid crystal layer, the diameter (A) of the ball spacers is 3 to 14 µm, the hard coating layer having the ball spacers embedded therein of the first hard coating layer and the second hard coating layer has a thickness (B) of 1 to 10 µm, and (A)-(B) has a value of 2 to 10 µm.

In the present disclosure, the first alignment film and the second alignment film may each independently have a thickness of 30 to 300 nm.

The present disclosure may be characterized in that, when each polarization axis of the first polarizing plate and the second polarizing plate is aligned at 0°, it is driven by a vertical alignment (VA) mode, and when each polarization axis of the first polarizing plate and the second polarizing plate is aligned at 90°, it is driven by a twisted nematic (TN) mode.

In the present disclosure, the average embedding depth of the hard coating layer of the ball spacers may exceed 50% of the thickness of the hard coating layer.

In the present disclosure, at least one transparent conductive layer of the first transparent conductive layer and the second transparent conductive layer may be formed in direct contact with the polarizing plate by including a highly adhesive layer between the at least one transparent conductive layer and one polarizing plate of the first polarizing plate and the second polarizing plate.

In the present disclosure, at least one polarizing plate of the first polarizing plate and the second polarizing plate may include one or more selected from the group consisting of a protective layer, a retardation matching layer, and a refractive index-matching layer.

In the present disclosure, at least one polarizing plate of the first polarizing plate and the second polarizing plate may have a thickness of 30 to 200 µm.

In the present disclosure, the area occupied by the ball spacers in the liquid crystal layer may be 0.01 to 10% of the area of the liquid crystal layer.

In the present disclosure, the transmittance variable optical laminate may further include one or more selected from the group consisting of a pressure sensitive adhesive/adhesive layer, an ultraviolet absorbing layer, and an impact resistant layer.

Furthermore, the present disclosure relates to a method for producing the transmittance variable optical laminate.

Furthermore, the present disclosure relates to a smart window including the transmittance variable optical laminate.

Furthermore, the present disclosure relates to a smart window, wherein the smart window has glass bonded onto one or both surfaces of the transmittance variable optical laminate.

Furthermore, the present disclosure relates to a means of transportation including the smart window.

Furthermore, the present disclosure relates to an automobile, wherein the smart window is applied to at least one of a front window, a rear window, a side window, a sunroof window, and an internal partition.

Furthermore, the present disclosure relates to a wearable device including the smart window.

Furthermore, the present disclosure relates to a building window including the smart window.

### [Advantageous Effects]

According to the transmittance variable optical laminate according to the present disclosure, the ball spacers are fixed in a form in which they are embedded in the hard coating layer so that damage to the laminate can be prevented by minimizing the movement of the ball spacers, and particularly a light leakage phenomenon between the liquid crystal layer and the other laminate can be prevented by preventing damage to the alignment film due to the movement of the ball spacers.

In addition, according to the transmittance variable optical laminate according to the present disclosure, the ball spacers have a diameter (A) of 3 to 14 µm, the hard coating layer having the ball spacers embedded therein of the first hard coating layer and the second hard coating layer has a thickness (B) of 1 to 10 µm, and (A)-(B) has a value of 2 to 10 µm, wherein the above range is satisfied so that the cell gap maintenance characteristic of the liquid crystal is excellent and a constant optical color within the plane can be maintained.

In addition, according to the transmittance variable optical laminate according to the present disclosure, since the conductive layer is formed directly on one surface of the polarizing plate, a separate substrate for forming the conductive layer is not included, and a process such as dispersing spacers separately can be omitted, so that the production process can be simplified compared to the conventional optical laminate.

A smart window with excellent device reliability and a means of transportation, an automobile, a wearable device, and a building window to which the same is applied can be provided by applying the transmittance variable optical laminate according to the present disclosure.

### [Description of Drawings]

FIG. 1 is a cross-sectional view illustrating a laminated structure of a transmittance variable optical laminate according to one embodiment of the present disclosure.
FIG. 2 is an enlarged cross-sectional view illustrating a spacer embedding portion of a transmittance variable optical laminate according to one embodiment of the present disclosure.
FIG. 3 is a cross-sectional view illustrating a laminated structure of a transmittance variable optical laminate according to another embodiment of the present disclosure.
FIG. 4 is a cross-sectional view illustrating a laminated structure of a smart window for a vehicle according to one embodiment of the present disclosure.
FIG. 5 is a cross-sectional view illustrating a laminated structure of a smart window for building windows according to one embodiment of the present disclosure.
FIG. 6 is a cross-sectional view illustrating a laminated structure of a smart window for building windows according to another embodiment of the present disclosure.
FIG. 7 is a process diagram illustrating a production process of a transmittance variable optical laminate according to one embodiment of the present disclosure.
FIG. 8 is a drawing illustrating a result of observing the appearance of a portion where a black amorphous spot has occurred in a transmittance variable optical laminate.
FIG. 9 is a drawing illustrating a result of observing the appearance of a portion where a liquid crystal stain has occurred on the surface of a transmittance variable optical laminate.
FIG. 10 is a drawing illustrating a result of observing the appearance of a portion where a light leak phenomenon has occurred on the surface of a transmittance variable optical laminate.

Each symbol in the drawings represents the following:
100: Polarizing plate
110: Polarizer
120: Hard coating layer
200: Transparent conductive layer
300: Alignment film
400: Ball spacer
500: Liquid crystal layer
600: Sealant
700: Pressure sensitive adhesive/adhesive layer
800: Smart window glass for vehicles
900: Smart window glass for building windows

### [Best Mode for Carrying Out the Invention]

The present disclosure relates to a transmittance variable optical laminate having excellent optical properties and improved reliability by fixing ball spacers to a hard coating layer to minimize the movement of the spacers, thereby uniformly maintaining a cell gap, a method for producing the same, and a smart window including the same.

More specifically, the present disclosure relates to a transmittance variable optical laminate including: a first laminate in which a first polarizing plate including a first hard coating layer, a first transparent conductive layer, and a first alignment film are laminated in that order; a second laminate in which a second polarizing plate including a second hard coating layer, a second transparent conductive layer, and a second alignment film are laminated in that order; and a liquid crystal layer disposed between the first alignment film and the second alignment film, wherein at least one transparent conductive layer of the first transparent conductive layer and the second transparent conductive layer is formed in direct contact with one polarizing plate of the first polarizing plate and the second polarizing plate, and includes ball spacers embedded in at least one hard coating layer of the first hard coating layer and the second hard coating layer so as to maintain a gap between layers existing above and below the liquid crystal layer, the diameter (A) of the ball spacers is 3 to 14 µm, the hard coating layer having the ball spacers embedded therein of the first hard coating layer and the second hard coating layer has a thickness (B) of 1 to 10 µm, and (A)-(B) has a value of 2 to 10 µm.

The transmittance variable optical laminate of the present disclosure is particularly suitable for a technical field capable of changing the light transmittance according to the application of voltage, and may be used, for example, in a smart window, etc.

A smart window refers to an optical structure that controls the amount of light or heat that passes through by changing the light transmittance according to the application of an electrical signal. That is, a smart window is provided so that it may be changed into a transparent, opaque, or translucent state by voltage, and is also called a variable transmittance glass, a light control glass, a smart glass, or the like.

Smart windows may be used as partitions for partitioning or privacy protection of the interior space of vehicles and buildings, or as skylights disposed in openings of buildings, may also be used as highway signs, bulletin boards, scoreboards, clocks, or advertising screens, and can be used as replacements for glass of transportation means such as windows or sunroofs of transportation means such as automobiles, buses, airplanes, ships, or trains.

The transmittance variable optical laminate of the present disclosure can also be used as a smart window in the various technical fields described above, but since the transparent conductive layer is formed directly on the polarizing plate, it does not include a separate substrate for forming the conductive layer, so it has a thin thickness and is advantageous to flexural properties, and can be particularly suitable for use as a smart window for vehicles or buildings. In one embodiment, a smart window to which the transmittance variable optical laminate of the present disclosure is applied can be used in transportation means, such as a front window, a rear window, a side window, and a sunroof window of an automobile, or a building window, and in addition to the use for blocking external light, can also be used for partitioning the internal space of an automobile or a building, such as an internal partition, or for protecting privacy, and can also be used in wearable devices such as a helmet, glasses, or a watch.

Hereinafter, with reference to the drawings, the embodiments of the present disclosure will be described in more detail. However, the following drawings attached to this specification illustrate preferred embodiments of the present disclosure, and serve to further understand the technical idea of the present disclosure together with the contents of the invention described above, so the present disclosure should not be interpreted as being limited to matters described in such drawings.

The terms used in this specification are for the purpose of describing embodiments and are not intended to limit the present disclosure. In this specification, the singular also includes the plural unless specifically stated in the phrase. For example, the "polarizing plate" used in this specification may mean at least one polarizing plate of the first polarizing plate and the second polarizing plate, the "transparent conductive layer" may mean at least one transparent conductive layer of the first transparent conductive layer and the second transparent conductive layer, and the "hard coating layer" may mean at least one hard coating layer of the first hard coating layer and the second hard coating layer.

The terms "comprises" and/or "comprising" used in this specification are used in the sense that they do not exclude the presence or addition of one or more other components, steps, operations, and/or elements other than the mentioned components, steps, operations, and/or elements. Throughout the specification, the same reference numerals refer to the same components.

The spatially relative terms "below", "bottom surface", "lower part", "above", "top surface", and "upper part" may be used to easily describe the correlation between one element or component and another element or component as illustrated in the drawings. The spatially relative terms should be understood as terms that include different directions of the elements when used or operated in addition to the directions illustrated in the drawings. For example, when an element illustrated in the drawings is flipped, an element described as "below" or "lower part" of another element may be put "above" the other element. Accordingly, the exemplary term "below" may include both the directions below and above. The elements may also be oriented in other directions, and thus the spatially relative terms may be interpreted according to the orientation.

The "substantially" used in this specification may be interpreted to include not only physically completely identical or coincident, but also within a range of error in the measurement or production process, for example, it may be interpreted to mean a range of error of 0.1% or less.

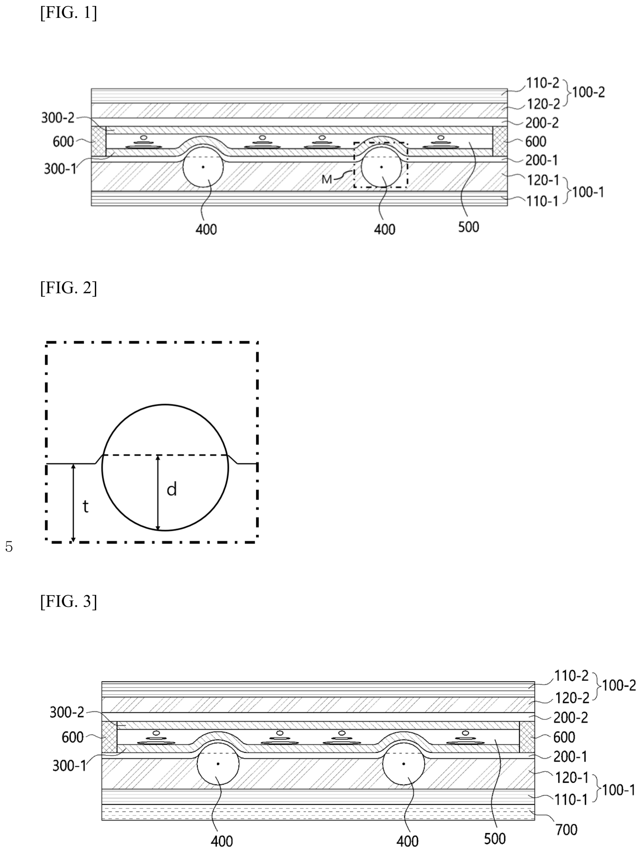

Referring to FIGS. 1 and 2, the transmittance variable optical laminate according to one embodiment of the present disclosure may include a first laminate, a second laminate, and a liquid crystal layer 500. The first laminate may include a first polarizing plate 100-1 including a first polarizer 110-1 and a first hard coating layer 120-1, a first transparent conductive layer 200-1, and a first alignment film 300-1, and the second laminate may include a second polarizing plate 100-2 including a second polarizer 110-2 and a second hard coating layer 120-2, and a second transparent conductive layer 200-2. In one embodiment of the present disclosure, the first hard coating layer 120-1 has ball spacers 400 embedded therein, but any of the hard coating layers, as long as it is at least one hard coating layer of the first hard coating layer 120-1 and the second hard coating layer 120-2, is not limited.

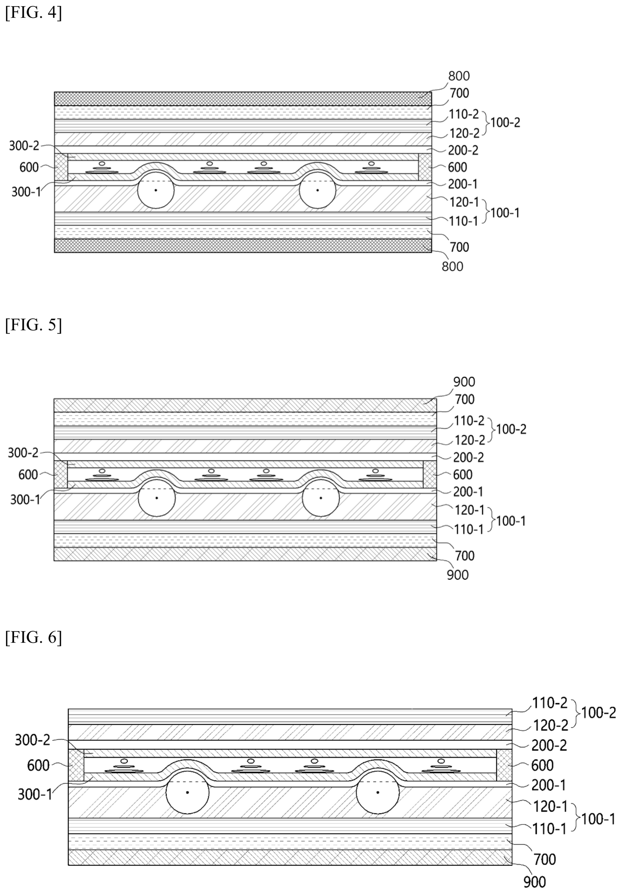

In addition, referring to FIG. 3, in the case of the transmittance variable optical laminate according to another embodiment of the present disclosure, a pressure sensitive adhesive/adhesive layer 700 may be further included on the outermost surface of the laminate. More specifically, referring to FIGS. 4 to 6, the smart window in one embodiment may include the transmittance variable optical laminate, the pressure sensitive adhesive/adhesive layer 700, and glass 800 and 900.

The polarizer 110 may use a polarizer developed conventionally or later, and may use, for example, a stretchable polarizer or a coating-type polarizer.

In one embodiment of the present disclosure, it is preferable that the polarizer 110 uses a stretchable polarizer in terms of process ease. The stretchable polarizer may include, for example, a stretched polyvinyl alcohol (PVA)-based resin. The polyvinyl alcohol-based resin may preferably be a polyvinyl alcohol-based resin obtained by saponifying a polyvinyl acetate resin. The polyvinyl acetate resin may include a copolymer of vinyl acetate and other monomers copolymerizable therewith in addition to polyvinyl acetate, which is a homopolymer of vinyl acetate. The other monomers may include an unsaturated carboxylic acid-based monomer, an unsaturated sulfonic acid-based monomer, an olefin-based monomer, a vinyl ether-based monomer, an acrylamide-based monomer having an ammonium group, and the like. In addition, the polyvinyl alcohol-based resin may be a modified one, and may be, for example, polyvinyl formal or polyvinyl acetal modified with aldehydes.

In some embodiments, the coating-type polarizer may be formed by a liquid crystal coating composition, wherein the liquid crystal coating composition may include a reactive liquid crystal compound and a dichroic dye.

The reactive liquid crystal compound may include, for example, a Reactive mesogen (RM) and a polymerizable terminal functional group, and may include a monomer molecule having a liquid crystal phase after a crosslinking reaction by heat or light. When the reactive liquid crystal compound is polymerized by light or heat, a polymer network may be formed while maintaining the liquid crystal arrangement.

The reactive liquid crystal compound may be a monofunctional or polyfunctional reactive liquid crystal compound. The monofunctional reactive liquid crystal compound is a compound having one polymerizable functional group, and the polyfunctional reactive liquid crystal compound may refer to a compound having two or more polymerizable functional groups.

The dichroic dye is a component that is included in a liquid crystal coating composition to impart polarization characteristics, and has properties in which the absorbance in the long-axis direction of the molecule and the absorbance in the short-axis direction are different. Non-limiting examples of the dichroic dyes may include acridine coloring matters, oxazine coloring matters, cyanine coloring matters, naphthalene coloring matters, azo coloring matters, anthraquinone coloring matters, etc. These may be used alone or in combination of two or more.

The liquid crystal coating composition may further include a solvent capable of dissolving the reactive liquid crystal compound and the dichroic dye, and for example, propylene glycol monomethyl ether acetate (PGMEA), methyl ethyl ketone (MEK), xylene, and chloroform may be used. The liquid crystal coating composition may further include a leveling agent, a polymerization initiator, and the like, within a range that does not impair the polarization characteristics of the coating film.

The hard coating layer 120 is provided to improve the hardness of the polarizing plate 100, and any hard coating layer developed conventionally or later can be used without particular limitation as long as it can improve the hardness of the polarizing plate, and according to one embodiment of the present disclosure, it may be formed from a hard coating composition including an acrylate-based or epoxy-based compound, inorganic fine particles, a photoinitiator, etc. The acrylate-based compound may include a monomer or oligomer containing a (meth)acrylate group, and the term "(meth)acryl-" used in this specification is used to refer to "methacryl-", "acryl-", or both. Non-limiting examples of the acrylate-based compound may include neopentyl glycol acrylate, 1,6-hexanediol (meth)acrylate, propylene glycol di(meth)acrylate, triethylene glycol di(meth)acrylate, dipropylene glycol di(meth)acrylate, polyethylene glycol di(meth)acrylate, polypropylene glycol di(meth)acrylate, trimethylolpropane tri(meth)acrylate, trimethylolethane tri(meth)acrylate, 1,2,4-cyclohexane tetra(meth)acrylate, pentaglycerol tri(meth)acrylate, pentaerythritol tetra(meth)acrylate, pentaerythritol tri(meth)acrylate, dipentaerythritol tri(meth)acrylate, dipentaerythritol penta(meth)acrylate, dipentaerythritol tetra(meth)acrylate, dipentaerythritol hexa(meth)acrylate, tripentaerythritol tri(meth)acrylate, tripentaerythritol hexatri(meth)acrylate, bis(2-hydroxyethyl)isocyanurate di(meth)acrylate, hydroxyethyl(meth)acrylate, hydroxypropyl(meth)acrylate, hydroxybutyl(meth)acrylate, isooctyl (meth)acrylate, isodecyl (meth)acrylate, stearyl(meth)acrylate, tetrahydrofurfuryl(meth)acrylate, phenoxyethyl (meth)acrylate, or isobornyl (meth)acrylate. These may be used alone or in combination of two or more. The acrylate-based compound may include an epoxy (meth)acrylate compound and/or a urethane (meth)acrylate compound. In addition, the epoxy-based compound may include a monomer or oligomer having at least one epoxy group in the molecule. The epoxy group may be an alicyclic epoxy group. The alicyclic ring included in the epoxy group may have 3 to 7 carbon atoms, and may be, for example, an alicyclic epoxy group (cyclohexyl epoxy) including a cyclohexane ring. The alicyclic ring may have a substituent. For example, the alicyclic ring may include an alkyl substituent having 1 to 20 carbon atoms. When the alkyl substituent has more than 20 carbon atoms, it may be disadvantageous in terms of the curing speed. The alkyl substituent may include a linear or branched type, and in the case of the branched type, the number of carbon atoms may be 3 or more.

According to one embodiment of the present disclosure, in the method for preparing a hard coating layer, the hard coating composition includes inorganic fine particles. According to one embodiment of the present disclosure, inorganic fine particles having a particle diameter of nanoscale, for example, nano-fine particles having a particle diameter of 100 nm or less, preferably 10 to 100 nm, more preferably 10 to 50 nm may be used as the inorganic fine particles. In addition, for example, silica fine particles, aluminum oxide particles, titanium oxide particles, zinc oxide particles, or the like may be used as the inorganic fine particles.

The hardness of the hard coating layer can be further improved by including the inorganic fine particles. According to one embodiment of the present disclosure, the inorganic fine particles may be contained in an amount of 10 to 60 parts by weight, preferably 20 to 50 parts by weight, based on 100 parts by weight of the hard coating composition. The hardness improvement effect of the hard coating layer can be achieved due to the addition of the inorganic fine particles within a range that does not impair the physical properties of the hard coating composition by containing the inorganic fine particles in the above range.

According to one embodiment of the present disclosure, in the method for preparing a hard coating layer, the hard coating composition includes a photoinitiator. According to one embodiment of the present disclosure, the photoinitiator may include 1-hydroxycyclohexylphenyl ketone, 2-hydroxy-2-methyl-1-phenyl-1-propanone, 2-hydroxy-1-[4-(2-hydroxyethoxy)phenyl]-2-methyl-1-propanone, methylbenzoyl formate, α,α-dimethoxy-α-phenylacetophenone, 2-benzoyl-2-(dimethylamino)-1-[4-(4-morpholinyl)phenyl]-1-butanone, 2-methyl-1-[4-(methylthio)phenyl]-2-(4-morpholinyl)-1-propanonediphenyl(2,4,6-trimethylbenzoyl)-phosphine oxide, bis(2,4,6-trimethylbenzoyl)-phenylphosphine oxide, or the like, but is not limited thereto. In addition, products currently on the market may include Irgacure 184, Irgacure 500, Irgacure 651, Irgacure 369, Irgacure 907, Darocur 1173, Darocur MBF, Irgacure 819, Darocur TPO, Irgacure 907, Esacure KIP 100F, etc.

These photoinitiators may be used alone or in mixtures of two or more different types.

According to one embodiment of the present disclosure, the photoinitiator may be contained in an amount of 0.5 to 10 parts by weight, preferably 1 to 5 parts by weight, based on 100 parts by weight of the hard coating composition. When the photoinitiator is within the above range, sufficient crosslinking photopolymerization can be achieved without impairing the physical properties of the hard coating film.

Meanwhile, in the method for preparing the hard coating layer of the present disclosure, the hard coating composition may additionally include additives commonly used in the art to which the present disclosure belongs, such as a surfactant, an anti-yellowing agent, a leveling agent, or an antifouling agent in addition to the above-described components. In addition, since the content thereof may be adjusted in various ways within a range that does not impair the physical properties of the hard coating composition according to the present disclosure, it is not particularly limited.

The hard coating layers 120 may be each used alone, and in some embodiments, may be used in a multilayer structure. In addition, the hard coating layers 120 may be formed in direct contact with one surface of the polarizer 110 as illustrated in FIG. 1, but is not limited thereto. For example, when the polarizing plate includes a retardation matching layer and/or a refractive index-matching layer, the hard coating layer 120 may be formed on one surface of the retardation matching layer and the refractive index-matching layer so that the hard coating layer, the retardation matching layer, the refractive index-matching layer, and the polarizer are sequentially laminated.

The hard coating layer 120 is preferably formed on the liquid crystal layer 500 side of the polarizer 110, that is, on the inner side of the polarizer 110, but is not limited thereto, and may also be formed on the outer side of the polarizer 110 so that the polarizer 110, the hard coating layer 120, and the protective layer (not shown) are sequentially laminated. For example, the first hard coating layer 120-1 and the second hard coating layer 120-2 may be provided on the inner side of the first polarizer 110-1 and the second polarizer 110-2, respectively, so that they may be arranged to face each other, and in this case, the hard coating layer provides hardness at a level suitable for forming a member such as a transparent conductive layer or the like in the polarizing plate, thereby having the advantage of minimizing cracks or scratches occurring during the production or processing process of the optical laminate.

The hard coating layer 120 may have a Vickers hardness of 18 to 41, and the Vickers hardness may be measured using a Vickers tip of a nanoindenter (HM500, Helmut Fishcher), and may be evaluated by proceeding with the measurement under the conditions of the load speed and the unload speed being the same at 300 mN/20 sec, the creep time being maintained for 5 sec, and the maximum load being 100 mN. When the Vickers hardness of the functional coating layer satisfies the above range, the functional coating layer not only may have excellent wear resistance, but also may have further improved bending resistance and durability of the optical laminate, and more specifically, it is possible to effectively suppress the occurrence of defects such as cracks in the conductive layer due to pressure applied by spacers in the bonding process of the optical laminate or a chemical reaction of a liquid crystal, an alignment film, etc.

In one embodiment, the hard coating layer 120 may have a thickness of 1 to 50 µm, more preferably, 1 to 40 µm, and the hard coating layer having the ball spacers embedded therein of the first hard coating layer 120-1 and the second hard coating layer 120-2 may have a thickness of 1 to 10 µm. The thickness may refer to the thickness after drying, and when the thickness of the hard coating layer 120 satisfies the above range, thinning may be possible while the hardness is excellent, and the bending resistance or durability may be further improved. When the thickness of the hard coating layer having the ball spacers embedded therein of the first hard coating layer 120-1 and the second hard coating layer 120-2 exceeds the above range so that the hard coating layer is prepared thick, the ball spacers may not be sufficiently embedded, which may cause problems in the uniformity of the thickness of the liquid crystal layer and the visibility of the device.

According to one embodiment of the present disclosure, at least one hard coating layer of the first hard coating layer 120-1 and the second hard coating layer 120-2 may have ball spacers embedded therein. The spacers serve to maintain a constant cell gap of the liquid crystal layer and may include at least one spacer of ball spacers and column spacers, but in one embodiment of the present disclosure, it is preferable to have ball spacers 400 in terms of processability. In one embodiment of the present disclosure, a hard coating layer having ball spacers embedded therein may be prepared by mixing ball spacers into a hard coating composition and going through a drying and curing process. Before the hard coating layer is cured, the ball spacers may be positioned and fixed in the hard coating layer to minimize the movement of the spacers, thereby preventing damage to the laminate due to being pushed of the ball spacers. In particular, since damage to the alignment film caused by the movement of the ball spacers can be prevented, the occurrence rate of defects such as a light leakage phenomenon between the liquid crystal layer and other laminates can be reduced, and a constant optical color within the plane can be maintained.

In addition, since the process of dispersing the spacers separately can be omitted, the production process may be simplified compared to the conventional optical laminate. The ball spacers 400 may be one or more, and it is preferable to have a diameter of 3 to 14 µm in performing the role of supporting the liquid crystal layer.

In addition, when viewed in the plane direction, the area occupied by the ball spacers 400 in the liquid crystal layer is preferably 0.01 to 10% of the area of the liquid crystal layer in terms of the user's visibility and the transmittance improvement in the light-transmitting mode.

FIG. 2 is an enlarged cross-sectional view illustrating a spacer embedding portion of a transmittance variable optical laminate according to one embodiment of the present disclosure. Referring to FIG. 2, the average embedding depth (d) of the ball spacers 400 in the hard coating layer according to one embodiment of the present disclosure is preferably more than 50% of the thickness (t) of the hard coating layer in terms of the improvement of the fixation of the ball spacer, and it is most preferably embedded and fixed in a state where before the hard coating layer is cured, it completely sinks into the hard coating composition and comes into contact with the lower surface of the hard coating layer, that is, the upper surface of the layer that comes into contact with the lower surface of the hard coating layer. If the embedding depth (d) of the ball spacers 400 in the hard coating layer is not more than the above range, the ball spacers may not be sufficiently fixed to the hard coating layer during the curing process so that the transparent conductive layer formed on the top of the hard coating layer and the ball spacers may not be uniformly formed, possibly causing a current short circuit.

In addition, in one embodiment of the present disclosure, when ball spacers 400 is embedded in the first hard coating layer 120-1, the first laminate may have a laminated structure including a first polarizer 110-1, a first hard coating layer 120-1 formed on one surface of the first polarizer 110-1, a plurality of ball spacers 400 embedded in the first hard coating layer 120-1, a first transparent conductive layer 200-1 formed on the first hard coating layer 120-1 in which the plurality of ball spacers 400 are embedded, and a first alignment film 300-1 formed on the first transparent conductive layer 200-1.

In addition, in one embodiment of the present disclosure, it is preferable that the value obtained by subtracting the thickness (B) of the hard coating layer having the ball spacers embedded therein from the diameter (A) of the ball spacers is 2 to 10 µm. When the above range is satisfied, the liquid crystal color is uniformly formed, and the appearance of the device including the transmittance variable optical laminate according to the present disclosure may be formed well.

The protective layer (not shown) may be formed in direct contact with one surface or both surfaces of the polarizer, but is not limited thereto. For example, the protective layer may be used as a multilayer structure in which one or more protective layers are continuously laminated, and may be formed in direct contact with another member such as a retardation matching layer.

In one embodiment, the protective film 320 may include one or more selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and a cyclic olefin polymer (COP).

In addition, the protective layer may further include an ultraviolet absorber on the outermost surface to prevent deterioration of the function of the optical laminate. The ultraviolet absorber is not particularly limited as long as it is for preventing deterioration of the optical laminate due to UV rays, and for example, salicylic acid-based ultraviolet absorbers (phenyl salicylate, p-tert-butyl salicylate, etc.), benzophenone-based ultraviolet absorbers (2,4-dihydroxybenzophenone, 2,2'-dihydroxy-4,4'-dimethoxybenzophenone, etc.), benzotriazole-based ultraviolet absorbers (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazol-2-yl)-6-(linear and branched dodecyl)-4-methylphenol, mixtures of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, etc.), cyanoacrylate-based ultraviolet absorbers (2'-ethylhexyl-2-cyano-3,3-diphenylacrylate, ethyl-2-cyano-3-(3',4'-methylenedioxyphenyl)-acrylate, etc.), triazine-based ultraviolet absorbers, etc., may be used, benzotriazole-based ultraviolet absorbers or triazine-based ultraviolet absorbers having high transparency and excellent effect in preventing deterioration of polarizing plates or transmittance variable layers are preferred, and benzotriazole-based ultraviolet absorbers having more appropriate spectral absorption spectra are particularly preferred. The benzotriazole-based ultraviolet absorber may be bis-based, and it may be, for example, 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), etc.

In one embodiment, the polarizing plate 100 may further include other components to assist or enhance the characteristics of the optical laminate in addition to the components described above, and may further include, for example, a retardation matching layer, a refractive index-matching layer, etc. in order to further enhance the optical properties.

The retardation matching layer (not shown) is intended to complement the optical properties of the optical laminate and may be implemented in the form of a retardation film, etc., and a retardation film, etc. that is developed conventionally or later can be used. For example, a quarter-wave plate (1/4 wave plate), a half-wave plate (1/2 wave plate), or the like for delaying the phase of light can be used, and these can be used alone or in combination. The retardation matching layer may be formed in direct contact with one surface of the polarizer, but is not limited thereto. For example, the retardation matching layer may be formed in direct contact with one surface of the protective layer, or may be formed in direct contact with one surface of the refractive index-matching layer. The retardation matching layer may use a polymer stretched film or a liquid crystal polymer film that is stretched in an appropriate manner by stretching a polymer film that can impart optical anisotropy by stretching.

In one embodiment, the polymer stretched film may use a polymer layer including: a polyolefin such as polyethylene (PE), polypropylene (PP), or the like; a cycloolefin polymer (COP) such as polynorbornene or the like; a polyester such as polyvinyl chloride (PVC), polyacrylonitrile (PAN), polysulfone (PSU), acryl resin, polycarbonate (PC), polyethylene terephthalate (PET), or the like; a cellulose ester-based polymer such as polyacrylate, polyvinyl alcohol (PVA), triacetyl cellulose (TAC), or the like; and/or a copolymer of two or more monomers of the monomers forming the polymer.

The method for obtaining the polymer stretched film is not particularly limited, and for example, the polymer stretched film may be obtained by forming the polymer material into a film form and then stretching it. The method for forming the polymer material into a film form is not particularly limited, and it is possible to form the polymer material into a film by known methods such as injection molding, sheet molding, blow molding, injection blow molding, inflation molding, extrusion molding, foam molding, and cast molding, and secondary processing molding methods such as pressure molding and vacuum molding may also be used. Among them, extrusion molding and cast molding are preferably used. At this time, for example, an extruder or the like having a T-die, a circular die, etc. mounted thereon may be used to perform extrusion molding of an unstretched film. When obtaining a molded product by extrusion molding, a material in which various resin components, additives, etc. are melt-mixed in advance may be used or the unstretched film may also be molded through melt-mixing during extrusion molding. In addition, a solvent common to various resin components, for example, a solvent such as chloroform, methylene dichloride, or the like may be used to dissolve various resin components, and then cast and dry-solidified, thereby cast-forming an unstretched film.

The polymer stretched film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method by tenter stretching, a biaxial stretching method by tubular stretching, etc. to enable a biaxially stretched film to be manufactured.

The liquid crystal polymerization film may include a reactive liquid crystal compound in a polymerized state. The above description of the reactive liquid crystal compound of the coating-type polarizer may be equally applied to the reactive liquid crystal compound.

In one embodiment, the retardation matching layer may have a thickness of 10 µm to 100 µm in the case of a polymer stretched film, and 0.1 µm to 5 µm in the case of a liquid crystal polymer film.

The refractive index-matching layer (not shown) is provided to compensate for the refractive index difference of the optical laminate due to the transparent conductive layer 200 to be described later, and may serve to improve visibility properties, etc. by reducing the refractive index difference. In addition, the refractive index-matching layer may be provided to correct the color caused by the transparent conductive layer 200. Meanwhile, in the case where the transparent conductive layer has a pattern, the difference in transmittance between the pattern area where the pattern is formed and the non-pattern area where the pattern is not formed can be compensated for through the refractive index-matching layer.

Specifically, the transparent conductive layer 200 to be described later is laminated adjacent to another member (e.g., a polarizer, etc.) having a different refractive index, and a difference in light transmittance may be induced due to a difference in refractive index with the adjacent other layer. In particular, when a pattern is formed on the transparent conductive layer, a problem may occur in which the pattern area and the non-pattern area are recognized such that they may be distinguished. Therefore, the difference in light transmittance of the optical laminate can be reduced by including the refractive index-matching layer in the polarizing plate so that the refractive index is compensated for, and in particular, when a pattern is formed on the transparent conductive layer, the pattern area and the non-pattern area may not be distinguished and recognized.

In one embodiment, the refractive index of the refractive index-matching layer may be appropriately selected depending on the material of the adjacent other member, but may be preferably 1.4 to 2.6, and more preferably 1.4 to 2.4. In this case, light loss due to a sharp refractive index difference between the other member such as the polarizer or the like and the transparent conductive layer 200 can be prevented.

The refractive index-matching layer is not particularly limited as long as it can prevent a sharp refractive index difference between the other member such as the polarizer or the like and the transparent conductive layer 200, and a compound used in the formation of a refractive index-matching layer that is developed conventionally or later can be used, and for example, the refractive index-matching layer may be formed from a refractive index-matching layer forming composition including a polymerizable isocyanurate compound.

In one embodiment, the polarizing plate 100 may have a thickness of 10 to 300 µm, and at least one polarizing plate of the first polarizing plate 100-1 and the second polarizing plate 100-2 preferably has a thickness of 30 to 200 µm. When the thickness of the polarizing plate satisfies the above range, the process is easy, the polarizing plate is suitable for producing a uniform laminate, and can exhibit excellent optical properties.

The transparent conductive layer 200 is provided for driving the liquid crystal layer and may be formed in direct contact with the polarizing plate 100. For example, as illustrated in FIGS. 1 to 6, the first transparent conductive layer 200-1 and the second transparent conductive layer 200-2 may be formed in direct contact with the first polarizing plate 100-1 and the second polarizing plate 100-2, respectively. An optical laminate used in the manufacture of a conventional smart window or the like was manufactured by forming a conductive layer for driving a liquid crystal on one surface of a substrate and bonding the other surface of the substrate to a polarizing plate. However, the transmittance variable optical laminate according to the present disclosure is characterized in that the transmittance and bending properties are improved in the light transmission mode while reducing the thickness of the laminate by directly forming the conductive layer on one surface of the polarizing plate without including a separate substrate for forming the conductive layer. In one embodiment, the transparent conductive layer 200 may be formed by being directly deposited on one surface of the polarizing plate 100. At this time, the transparent conductive layer 200 may be formed in direct contact with the pretreatment-performed surface of the polarizing plate 100 after performing pretreatment such as corona treatment, plasma treatment, or the like on one surface of the polarizing plate 100 in order to improve adhesive force to the polarizing plate 100. The pretreatment is not limited to corona treatment or plasma treatment, and any pretreatment process that is conventionally or later developed may be used within a range that does not undermine the purpose of the present disclosure. In another embodiment, the transparent conductive layer 200 may be formed in direct contact with the polarizing plate 100 in a state that a highly adhesive layer (not shown) provided on one surface of the polarizing plate 100 is interposed therebetween in order to improve adhesive force to the polarizing plate 100. The transparent conductive layer 200 preferably has a transmittance to visible light of 50% or more, and may include, for example, one or more selected from the group consisting of transparent conductive oxides, metals, carbon-based materials, conductive polymers, conductive inks, and nanowires, but is not limited thereto, and materials for transparent conductive layers developed conventionally or later may be used. In addition, the conductive layer may be configured to have a structure of two or more layers by combining the materials. For example, the conductive layer may include a two-layer structure of a metal layer and a transparent conductive oxide layer, thereby lowering the reflectance of incident light and increasing the transmittance. The metal layer has high reflectance, so when used alone, the visibility of the screen can be reduced, but the reflectance may be lowered and the transmittance may be improved by laminating a transparent conductive oxide layer.

More specifically, in one embodiment, the transparent conductive oxide may include one or more selected from the group consisting of indium tin oxide (ITO), indium zinc oxide (IZO), indium zinc tin oxide (IZTO), aluminum zinc oxide (AZO), gallium zinc oxide (GZO), fluorine tin oxide (FTO), zinc oxide (ZnO), etc. In addition, the metal may include one or more selected from the group consisting of gold (Au), silver (Ag), copper (Cu), molybdenum (Mo), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), neodymium (Nd), alloys containing at least one thereof, etc., and may include, for example, a silver-palladium-copper (APC) alloy or a copper-calcium (CuCa) alloy. The carbon-based material may include one or more selected from the group consisting of carbon nanotubes (CNT), graphene, etc., and the conductive polymer may include one or more selected from the group consisting of polypyrrole, polythiophene, polyacetylene, PEDOT, polyaniline, etc. The conductive ink may be an ink in which a metal powder and a curable polymer binder are mixed, and the nanowire may be, for example, a silver nanowire (AgNW).

In addition, the transparent conductive layer 200 may be formed in a structure of two or more layers by combining the materials. For example, it may be formed in a two-layer structure including a metal layer and a transparent conductive oxide layer so that the reflectance of incident light is lowered and the transmittance is increased. The transparent conductive layer 200 may be formed by a method commonly used in the related field, and may be formed by selecting appropriate processes from processes including: a coating process such as a spin coating method, a roller coating method, a bar coating method, a dip coating method, a gravure coating method, a curtain coating method, a die coating method, a spray coating method, a doctor coating method, a kneader coating method, etc.; a printing process such as a screen printing method, a spray printing method, an inkjet printing method, a lithographic printing method, a plate printing method, a flat printing method, etc.; a deposition process such as an IML (In-Mold Labeling) injection method, a CVD (chemical vapor deposition) method, a PVD (physical vapor deposition) method, a PECVD (plasma enhanced chemical vapor deposition) method, etc.; and dry or wet plating processes.

In one embodiment, the transparent conductive layer 200 may have a thickness of 1 to 80 nm, preferably 5 to 70 nm, and more preferably 10 to 60 nm. The thickness of the transparent conductive layer is preferable in that it can improve optical properties including chromaticity and transmittance of the optical laminate when applied with a low voltage of 20 V or less within the above range, and can improve mechanical stability by fixing or maintaining it within a predetermined range.

The alignment film 300 is a layer that is provided on one surface of the first polarizing plate 100-1 and the second polarizing plate 100-2 to orient the liquid crystal molecules so that they are aligned in a specific position and direction, and may be provided on the liquid crystal layer 500 side of the polarizing plate, that is, on the inner side thereof, and arranged to face each other. The alignment film 300 may be formed by coating and then drying an alignment solution commonly used in the art to which the present disclosure belongs. In one embodiment, the alignment film 300 may have a thickness of 30 to 300 nm. Specifically, the alignment film having the ball spacers embedded therein may have a thickness of 30 to 300 nm, and the first alignment film and the second alignment film, which are arranged oppositely with respect to the liquid crystal layer, may have the same thickness or may differ by a deviation range of +30%. If the thickness of the alignment film is less than the above range, the alignment solution may not be uniformly applied during the alignment solution coating in the alignment film production process, which may cause a current short circuit due to interference between the alignment film and the transparent conductive layer, resulting in damage such as stains on the liquid crystal after the optical laminate is cured. If it exceeds the above range, liquid crystal defects or afterimages may be visible, and the response speed may become slow.

According to FIGS. 1 to 6, in one embodiment of the present disclosure, the transparent conductive layer 200 and the alignment film 300 may be sequentially laminated on a hard coating layer having ball spacers embedded therein to form a curved portion. The first alignment film 300-1 and the second alignment film 300-2 at the position in which the ball spacers may be embedded may be in contact with each other to support a liquid crystal layer, and a separation space between the first alignment film 300-1 and the second alignment film 300-2 may be created to form a liquid crystal layer 500. The thickness of the separation space does not exceed the thickness of the liquid crystal layer 500 to be described later.

The liquid crystal layer 500 can change the driving mode of the optical laminate by adjusting the transmittance of light incident from one or more directions according to an electric field. The liquid crystal layer may include a liquid crystal compound in a transmittance adjustment layer. For example, it may be positioned within a space provided by a sealant 600 and ball spacers 400 provided between a first polarizing plate 100-1 and a second polarizing plate 100-2 in a light control region. The liquid crystal compound is not particularly limited as long as it is capable of controlling the transmittance of light by being driven according to an electric field, a liquid crystal compound developed conventionally or later can be used, and for example, the content regarding the reactive liquid crystal compound of the above-described coating-type polarizer may be equally applied. The liquid crystal behavior method of the liquid crystal layer is not particularly limited, but may be driven by a twisted nematic (TN) mode, a super twisted nematic (STN) mode, a vertical alignment (VA) mode, etc. The driving method can be applied depending on the disposition state of the polarization axes, and for example, when the respective polarization axes of the first polarizing plate 100-1 and the second polarizing plate 100-2 are arranged at 0°, it is preferable to drive by the vertical alignment (VA) mode, and when they are arranged at 90°, it is preferable to drive by the twisted nematic (TN) mode. In one embodiment, the liquid crystal layer 500 may have a thickness of 1 to 20 µm, preferably 3 to 10 µm, and more preferably 4 to 7 µm. When the thickness of the liquid crystal layer is less than the above range, the transmittance may be reduced, and when it exceeds the above range, there is a possibility that haze may occur even in the transmission mode.

The sealant 600 may be positioned between the first polarizing plate 100-1 and the second polarizing plate 100-2 in the inactive area. The sealant may perform a function of bonding the first polarizing plate and the second polarizing plate, and may secure a space for providing a liquid crystal layer between the first polarizing plate and the second polarizing plate together with the spacer.

The sealant may include a curable resin as a base resin. As the base resin, an ultraviolet-curable resin or a thermosetting resin known in the art as one that may be usable for a sealant in the art may be used. The ultraviolet-curable resin may be a polymer of an ultraviolet-curable monomer. The thermosetting resin may be a polymer of a thermosetting monomer. For example, an acrylate-based resin, an epoxy-based resin, a urethane-based resin, a phenol-based resin, or mixtures of the resins may be used as the base resin of the sealant 600. In one embodiment, the base resin may be an acrylate-based resin, and the acrylate-based resin may be a polymer of an acrylic monomer. The acrylic monomer may be, for example, a polyfunctional acrylate. In another embodiment, the sealant may further include a monomer component in the base resin. The monomer component may be, for example, a monofunctional acrylate. In this specification, the monofunctional acrylate may mean a compound having one acrylic group, and the polyfunctional acrylate may mean a compound having two or more acrylic groups. The curable resin may be cured by irradiation with ultraviolet rays and/or heating. The ultraviolet irradiation conditions or heating conditions may be appropriately performed within a range that does not impair the purpose of the present application. The sealant may further include an initiator, for example, a photoinitiator or a thermal initiator, if necessary. The sealant may be formed by a method commonly used in the art, and may be formed, for example, by drawing the sealant onto the outer surface (i.e., the inactive area) of the liquid crystal layer using a dispenser having a nozzle.

The transmittance variable optical laminate of the present disclosure may further include other members within a range that does not impair the purpose of the present disclosure, and it may further include, for example, a pressure sensitive adhesive/adhesive layer 700 (see FIGS. 3 to 6), and may further include an ultraviolet absorbing layer (not shown) and an impact resistant layer (not shown).

The pressure sensitive adhesive/adhesive layer 700 may be formed using an adhesive or a pressure sensitive adhesive, and it is preferable that it has appropriate adhesive force so that peeling, bubbles, etc. do not occur when handling the optical laminate, and at the same time, it has transparency and thermal stability, and it may have viscoelastic properties applicable to smart windows.

The adhesive may use a conventionally or later-developed adhesive, and for example, a photocurable adhesive may be used. The photocurable adhesive exhibits strong adhesive force by being crosslinked and cured by receiving active energy rays such as ultraviolet (UV) rays, electron beams (EB), etc., and may be composed of a reactive oligomer, a reactive monomer, a photopolymerization initiator, etc. The reactive oligomer is an important component determining the properties of the adhesive, and forms a cured film by forming a polymer bond by a photopolymerization reaction. Usable reactive oligomers include polyester-based resins, polyether-based resins, polyurethane-based resins, epoxy-based resins, polyacrylic resins, silicone-based resins, etc. The reactive monomers play a role of crosslinkers and diluents of the above-mentioned reactive oligomers and affect the adhesive properties. Usable reactive monomers may include monofunctional monomers, polyfunctional monomers, epoxy-based monomers, vinyl ethers, cyclic ethers, etc. The photopolymerization initiator absorbs light energy to generate radicals or cations, thereby playing a role of initiating photopolymerization, and an appropriate one may be selected and used depending on the photopolymerization resin.

The pressure sensitive adhesive may use a conventionally or later-developed pressure sensitive adhesive, and in one embodiment, an acrylic pressure sensitive adhesive, a rubber-based pressure sensitive adhesive, a silicone-based pressure sensitive adhesive, a urethane-based pressure sensitive adhesive, a polyvinyl alcohol-based pressure sensitive adhesive, a polyvinyl pyrrolidone-based pressure sensitive adhesive, a polyacrylamide-based pressure sensitive adhesive, a cellulose-based pressure sensitive adhesive, a vinyl alkyl ether-based pressure sensitive adhesive, etc. may be used. The pressure sensitive adhesive is not particularly limited as long as it has pressure sensitive adhesive force and viscoelasticity, but in terms of ease of acquisition, etc., it may be preferably an acrylic pressure sensitive adhesive, and it may include, for example, a (meth)acrylate copolymer, a crosslinking agent, a solvent, etc. The crosslinking agent may use a conventionally or later-developed crosslinking agent, and may include, for example, a polyisocyanate compound, an epoxy resin, a melamine resin, a urea resin, dialdehydes, a methylol polymer, etc., and preferably, a polyisocyanate compound. The solvent may include a common solvent used in the field of resin compositions, and for example, solvents such as: alcohol-based compounds such as methanol, ethanol, isopropanol, butanol, propylene glycol methoxy alcohol, etc.; ketone-based compounds such as methyl ethyl ketone, methyl butyl ketone, methyl isobutyl ketone, diethyl ketone, dipropyl ketone, etc.; acetate-based compounds such as methyl acetate, ethyl acetate, butyl acetate, propylene glycol methoxy acetate, etc.; cellosolve-based compounds such as methyl cellosolve, ethyl cellosolve, propyl cellosolve, etc.; and hydrocarbon-based compounds such as hexane, heptane, benzene, toluene, xylene, etc. may be used. These may be used alone or in combination of two or more.

For example, for the manufacture of smart windows for vehicles, it may be appropriate to use adhesive layer materials such as polyvinyl butyral (PVB), ethylene vinyl acetate (EVA), etc., and for smart windows for building windows, it may be appropriate to use an adhesive layer, but the present disclosure is not limited thereto.

The thickness of the pressure sensitive adhesive/adhesive layer 700 may be appropriately determined depending on the type of resin that acts as the pressure sensitive adhesive/adhesive, the pressure sensitive adhesive/adhesive strength, the environment in which the pressure sensitive adhesive/adhesive is used, etc. In one embodiment, in order to secure sufficient pressure sensitive adhesive/adhesive force and minimize the thickness of the optical laminate in the pressure sensitive adhesive/adhesive layer, the adhesive layer may have a thickness of 0.1 to 500 µm, preferably 0.5 to 450 µm, more preferably 1 to 400 µm, and the pressure sensitive adhesive layer may have a thickness of 2 to 30 µm, preferably 3 to 20 µm, more preferably 5 to 10 µm. In one embodiment, the pressure sensitive adhesive/adhesive layer 700 may be formed on one surface or both surfaces of the polarizing plate by laminate or vacuum bonding method.

The ultraviolet absorbing layer (not shown) is not particularly limited as long as it is for preventing deterioration of the optical laminate due to ultraviolet rays, and the description of the ultraviolet absorber described in the protective layer may be applied as is, so the description is omitted.

The impact resistant layer (not shown) is not particularly limited as long as it is positioned inwardly and has the function of alleviating the impact when an impact is applied to the front surface of the window and preventing damage to the internal materials, and is preferably a material having a high tolerance for deformation energy, for example, a thermoplastic resin having high toughness. Examples of such resins may include polycarbonate-based resins, polyimide-based resins, polyamide-based resins, polyamideimide-based resins, polyester-based resins, etc. In addition, since the present disclosure is intended for use in a display device, it is preferable to use a resin having excellent light transmittance, preferably an optically transparent resin.

The present disclosure includes a method for producing the transmittance variable optical laminate described above. The method for producing the transmittance variable optical laminate is not particularly limited, and the transmittance variable optical laminate can be manufactured using any bonding technique or the above-described photolithography technique.

Referring to FIGS. 4 to 6, the present disclosure includes, in addition to the transmittance variable optical laminate, a smart window including the same, and includes an automobile in which the smart window is applied to at least one of a front window, a rear window, a side window, a sunroof window, and an internal partition, and a building window including the smart window. For example, an automobile including the smart window of the present disclosure may be one in which a vehicle glass 800 is bonded to both surfaces of a transmittance variable optical laminate including a polarizing plate 100 including a polarizer 110 and a hard coating layer 120, a transparent conductive layer 200, a liquid crystal layer 500, and a pressure sensitive adhesive/adhesive layer 700 (see FIG. 4), and an optical adhesive material used for glass bonding may be used without limitation as long as it is known in the art to be usable as an adhesive material. For example, it may be one or more selected from polyvinyl butyral (PVB), ethylene vinyl acetate (EVA), optically clear resin (OCR), and/or optically clear adhesive (OCA), and specifically, it is preferable to select the optical adhesive material having a storage modulus (G') of 1×10⁵ to 1×10⁷ Pa for PVB, 1×10⁴ to 1×10⁵ Pa for EVA, and 1×10³ to 1×10⁶ Pa for OCR and OCA at 25°C since the optical adhesive material improves the bonding durability against temperature and humidity changes in outdoor environmental conditions after bonding, not only has sufficient bonding strength and increases impact resistance of the glass window, thereby increasing safety, but also has sound insulation performance that compensates for low transmission loss of some high-frequency bands due to the waveform matching phenomenon of the glass.

For example, the smart window may be manufactured by placing an adhesive film such as an EVA film, a PVB film, or the like and a vehicle glass on both surfaces of an optical laminate, and then heating them using a press machine at a temperature of 90°C and about 1 bar or in a vacuum state for 10 to 20 minutes, or by coating a resin such as an optically clear resin (OCR) on one surface of the vehicle glass, and then vacuum-bonding the vehicle glass on both surfaces of the optical laminate and UV-curing the same. In addition, a smart window product for building windows may be one manufactured by bonding a building window (window glass, 900) to both surfaces (see FIG. 5) or one surface (see FIG. 6) of the transmittance variable optical laminate, and a smart window product for building windows having the same configuration as FIG. 5 or FIG. 6 may be manufactured by applying and then bonding window glass to both surfaces of the transmittance variable optical laminate with UV adhesive and then UV curing, and a smart window product for windows having the same configuration as FIG. 5 or FIG. 6 may be manufactured by bonding window glass to one surface of the transmittance variable optical laminate using a laminating method.

Further, in addition to that, it may be possible to apply the smart window to transportation means and wearable devices generally used in the relevant field.

### [Mode for Carrying Out the Invention]

Hereinafter, Examples of the present disclosure will be described in detail. However, the present disclosure is not limited to the Examples disclosed below, but can be implemented in various different forms, and these Examples are provided only to ensure that the disclosure of the present disclosure is complete and to fully inform those skilled in the art to which the present disclosure pertains of the scope of the invention, and the present disclosure is defined only by the scope of the claims. "%" and "part" in the Examples are mass% and mass part, respectively, unless specifically stated otherwise.

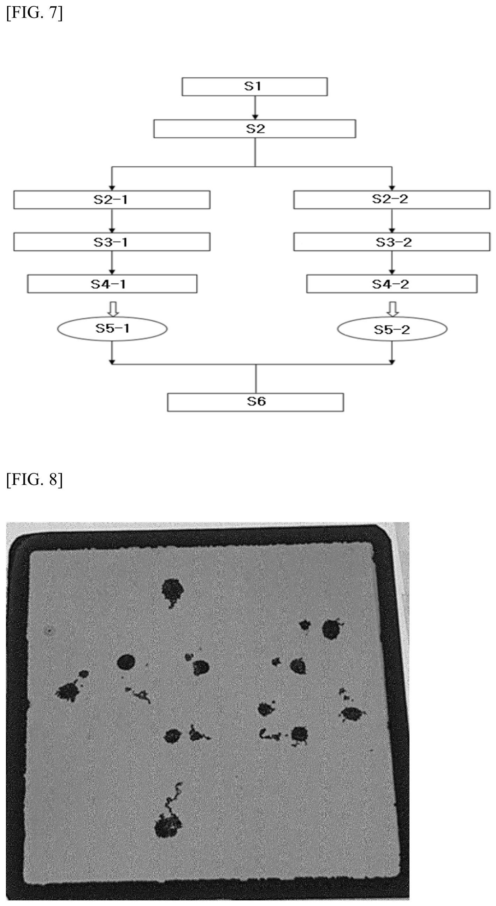

FIG. 7 is a process diagram illustrating a production process of a transmittance variable optical laminate according to one embodiment of the present disclosure. According to the description in FIG. 7 and the following contents, optical laminates of Examples and Comparative Examples were manufactured.

### Production Example 1: Polarizing Plate Production (S1)

### (1) Swelling treatment process

A polyvinyl alcohol film (fabric film) was immersed in a swelling bath containing pure water at 20°C for 30 seconds by returning it while continuously unwinding the polyvinyl alcohol film (fabric film) having a thickness of 60 µm (manufactured by Kuraray Co., Ltd., trade name "Kurare Poval Film VF-PE#6000", average degree of polymerization 2400, degree of saponification 99.9 mol%) from a fabric roll. In this swelling treatment process, a difference in peripheral speed was applied between the nip rolls to perform interroll stretching (longitudinal uniaxial stretching). The draw ratio based on the fabric film was set to 2.5 times.

### (2) Dyeing treatment process

Subsequently, the film that passed through the nip roll was immersed in a dyeing bath at 30°C with a mass ratio of pure water/potassium iodide/iodine/boric acid of 100/2/0.01/0.3 for 120 seconds. Even in this dyeing treatment, a difference in the peripheral speed was applied between the nip rolls to perform interroll stretching (longitudinal uniaxial stretching). The draw ratio based on the film after the swelling treatment process was set to 1.1 times.

### (3) Crosslinking treatment process

Subsequently, the film that passed through the nip roll was immersed in a first crosslinking bath at 56°C with a mass ratio of pure water/potassium iodide/boric acid of 100/12/4 for 70 seconds. A difference in the peripheral speed was applied between the nip roll and the nip roll provided between the first crosslinking bath and the second crosslinking bath to perform interroll stretching (longitudinal uniaxial stretching). The draw ratio based on the film after the dyeing treatment process was set to 1.9 times.

### (4) Complementary color treatment process

Subsequently, the film after the crosslinking treatment was immersed in a second crosslinking bath at 40°C with a mass ratio of potassium iodide/boric acid/pure water of 9/2.9/100 for 10 seconds.

### (5) Cleaning treatment process

Subsequently, the film after the second crosslinking treatment was immersed in a cleaning bath containing pure water at 14°C for 5 seconds, and cleaned at a shower amount of 5 m³/h and a shower temperature of 14°C.

At this time, the [PVA⁺I₃⁻] complex that absorbs the short-wavelength region band has characteristics of being weak to water, so the b* value of the group transmittance color varies greatly depending on the cleaning solution temperature, cleaning solution retention time, shower amount, shower temperature, and PVA moisture content.

### (6) Drying treatment process

Subsequently, the film after the cleaning treatment process was passed through a drying oven, and heated and dried at 80°C for 190 seconds to produce a polarizer film. The moisture content after drying was 13.6%, and the thickness of the obtained polarizer film was approximately 21 µm.

### (7) Bonding treatment process

Subsequently, a water-based adhesive containing 5 parts by mass of polyvinyl alcohol with respect to 100 parts by mass of water was prepared as an adhesive. Thereafter, a protective film was laminated on both sides of the polarizer film using the prepared UV adhesive. UV exposure was performed on the obtained laminate, and the adhesive was cured to produce the first polarizing plate and the second polarizing plate. In addition, the thickness of the adhesive layer in the obtained polarizing plate was about 2 µm.

### Production Example 2: Production of Hard Coating Composition (S2)

A hard coating composition was produced by mixing 16.2 g of a dendrimer compound (Miwon Specialty Chemical Co., Ltd, SP-1106), 14.4 g of inorganic nanoparticles (Nissan Chemical Corporation, MEK-AC-2140, solid content 40 wt%), 1.8 g of a multifunctional (meth)acrylate containing an ethylene glycol group (Japanese Gunpowder, DPEA126), 0.7 g of a photoinitiator, 1-hydroxycyclohexylphenyl ketone (TCI), and 2.9 g of a solvent, methyl ethyl ketone (Daerim Corporation).

### Production Example 3: Production of the First Hard Coating Layer (S2-1)

A mixed solution obtained by mixing the hard coating composition produced according to Production Example 2 and ball spacers (SEKISUI SP series) was dried on one surface of the first polarizing plate, and then the thickness of the dried mixed solution was adjusted by the moving speed of the substrate (m/min) and the flow rate of the mixed solution (ml/sec) to perform slot die coating, and the slot die-coated mixed solution was dried at 80°C for 5 minutes and then cured with a high-pressure mercury lamp at a light amount of 500 mJ/cm² to produce a first hard coating layer.

### Production Example 4: Production of Second Hard Coating Layer (S2-2)

The hard coating composition produced according to Production Example 2 was dried on one surface of a second polarizing plate, and then the thickness of the composition was adjusted by the moving speed (m/min) of the substrate and the flow rate (ml/sec) of the composition to perform slot die coating, and the slot die-coated composition was dried at 80°C for 5 minutes, and then cured with a high-pressure mercury lamp at a light amount of 500 mJ/cm² to produce a second hard coating layer.

### Production Example 5: Production of First Transparent Conductive Layer (S3-1)

The first polarizing plate provided with the first hard coating layer produced according to Production Example 3 was placed, and a sputtering gun was operated by applying 450 W DC power, and then plasma was induced on an ITO (10 wt% Sn doped In₂O₃) target to form a first transparent conductive layer (90 nm). The formed transparent conductive layer was ion-treated by operating an ion gun at 50 W DC power. At this time, a transparent conductive layer was produced while maintaining the pressure at 3 mTorr at room temperature and supplying argon gas and oxygen gas at 30 sccm and 1 sccm, respectively. At this time, the thickness of the transparent conductive layer was measured by FT-SEM.

### Production Example 6: Production of the First Alignment Film (S4-1, S5-1)

A TN alignment solution (RN-4662, Nissan Chemical Industries, Ltd.) was dried on the first transparent conductive layer produced according to Production Example 5 above, and then coating and drying (80°C/2 minutes) were performed by adjusting the thickness of the dried TN alignment solution with a Mayer Bar type. Thereafter, UV was irradiated on the dried alignment solution to produce a first alignment film, thereby producing a first laminate.

### Production Example 7: Production of the Second Transparent Conductive Layer (S3-2)

A second polarizing plate provided with the second hard coating layer produced according to Production Example 4 was placed, and a sputtering gun was operated by applying 450 W DC power, and then plasma was induced on the ITO (10 wt% Sn doped In₂O₃) target to form a second transparent conductive layer (90 nm). Ion treatment was performed on the formed second transparent conductive layer by operating an ion gun with 50 W DC power. At this time, a transparent conductive layer was produced while maintaining the pressure at 3 mTorr at room temperature and supplying argon gas and oxygen gas at 30 sccm and 1 sccm, respectively. At this time, the thickness of the transparent conductive layer was measured by FT-SEM.

### Production Example 8: Production of the Second Alignment Film (S4-2, S5-2)

A TN alignment solution (RN-4662, Nissan Chemical Industries, Ltd.) was dried on the second transparent conductive layer produced according to Production Example 7 above, and then coating and drying (80°C/2 minutes) were performed by adjusting the thickness of the dried TN alignment solution with a Mayer Bar type. Thereafter, UV was irradiated on the dried alignment solution to produce a second alignment film, thereby producing a second laminate.

### Production Example 9: Production of the Optical Laminate (S6)

A sealant (UVF-006, 70,000 mPa·s, SEKISUI Co., Ltd.) was applied on the first transparent conductive layer produced according to Production Example 5 using a sealant dispenser (SHOTmini 200Ωx, MUSASHI Co., Ltd.) at a discharge pressure of 200 mPa using a sharp needle (SPN-0.25-12.7L) according to the product size drawing, and a liquid crystal was injected onto the first alignment film by the ODF process method. Thereafter, the first laminate according to Production Example 6 and the second laminate according to Production Example 8 were bonded at a pressure of 3 kg/cm² in a state that the polarization axes of the first polarizing plate and the second polarizing plate were arranged parallel to each other at 0° or 90°, and then UV curing (500 mJ/cm²) was performed along the sealant line, thereby producing an optical laminate for a smart window. After that, the first transparent conductive layer and the second transparent conductive layer were connected by bonding a conductive copper tape (TERAOKA, No. 8323) thereto.

### Comparative Production Example 1: Spacer Dispersion

A mixed solvent was prepared by mixing ball spacers (SEKISUI SP series) based on 100 ml of IPA. The second laminate according to Production Example 8 was placed in a spacer disperser (SDSS-KHU02, Shindo Eng. Lab., Ltd.), and the prepared mixed solvent was sprayed at a 110°C condition and dried for 20 minutes.

### Examples 1 to 7 and Comparative Examples 1 to 3: Production of Optical Laminates

Optical laminates of Examples and Comparative Examples were produced according to Production Examples 1 to 9 except that the diameter of the ball spacers (A), the thickness of the first hard coating layer (B), and the thickness of the first alignment film having the ball spacers embedded therein were applied, respectively, as shown in Table 1 below.

**[Table 1]**

| Classification | Example | | | | | | | | Comparative Example | | | |
|---|---|---|---|---|---|---|---|---|---|---|---|---|
| | 1 | 2 | 3 | 4 | 5 | 6 | 7 | | 1 | 2 | 3 | |
| Ball spacer diameter (A) (µm) | 3 | 14 | 14 | 14 | 14 | 14 | 14 | | 2 | 15 | 14 | |
| Thickness of the first hard coating layer (B) (µm) | 1 | 4 | 4 | 4 | 10 | 4 | 4 | | 1 | 4 | 11 | |
| (A)-(B) (µm ) | 2 | 10 | 10 | 10 | 4 | 10 | 10 | | 1 | 11 | 3 | |
| First alignment film thickness (nm) | | | 150 | 150 | 30 | 300 | 150 | 25 | 310 | 150 | 150 | 150 |
| Optical property evaluation (Front) | Voltage ON | Transmittance (%) | 0 | 0.3 | 0.3 | 0.3 | 0 | 0.3 | 0.4 | 32 | 0.6 | 0.7 |
| | | Single-transmission color b* | -2 | 2 | 2 | 3 | 0 | 2 | 3 | 7 | 0 | 0 |
| | Voltage OFF | Transmittance (%) | 32 | 32 | 32 | 32 | 32 | 32 | 32 | 32 | 32 | 30 |
| | | Single-transmission color b* | 7 | 10 | 10 | 10 | 7 | 10 | 10 | 7 | 10 | 8 |
| Reliability drive evaluation | | | ○ | ○ | ○ | ○ | ○ | Δ | Δ | X | X | X |

### Experimental Example

### (1) Evaluation of ball spacer fixing force

When a first hard coating layer sample substrate having ball spacers embedded therein in which the process of Example 1 had been progressed up to Production Example 3 and a hard coating layer sample substrate of Comparative Production Example 1, in which ball spacers were not embedded in the hard coating layer but were separately dispersed, were prepared, and an air gun (nozzle diameter: 2 mmψ) was positioned at a 45° at a distance of 30 mm from the center of the sample substrate on top of the ball spacers, and then air was discharged at a pressure of 4 kg/cm², the initial number and the number of ball spacers remaining in the hard coating layer after the air discharge were checked using an optical microscope as the number of ball spacers existing within an area of 1 mm², and the results are shown in Table 2 below, based on the initial number of 100.

**[Table 2]**

| Sample substrate | Production Example 3 | Comparative Production Example 1 |
|---|---|---|
| Ball spacer fixing force evaluation (Number after evaluation/Initial number) | 100/100 | 0/100 |

### (2) Optical property evaluation

Spectral characteristics of the optical laminates of Examples 1 to 7 and Comparative Examples 1 to 3 above were evaluated using a spectrophotometer (CM-3700d, Konica Minolta). After positioning the upper polarizing plate in the direction of the light source, and measuring the transmittance (%) and each parallel value and orthogonal value for the single-transmission color b* values according to the voltage application method of voltage ON and voltage OFF in the central portion of the sample, and the average values of these values were determined as the optical properties and are shown in Table 1 above.

### (3) Reliability drive evaluation

The electrodes were connected to the copper tape of the optical laminate sample in a room temperature environment, voltage ON (10 V AC voltage) and voltage OFF methods repeatedly progressed, and the reliability drive evaluation was performed by judging the optical laminate sample as good or defect according to the evaluation criteria below, and the results are shown in Table 1 above. The good or defect criteria were evaluated according to Table 3 below.

### <Evaluation criteria>

○: Good when repeating the evaluation 100,000 times or more
△: Defects occur when the evaluation is progressed by repeating it 20,000 times to less than 100,000 times
X: Defects occur when the evaluation is progressed by repeating it less than 20,000 times

**[Table 3]**

| Classification | Voltage ON | | Voltage OFF | |
|---|---|---|---|---|
| | Liquid crystal color | Appearance | Liquid crystal color | Appearance |
| Good | Front black | No change | Front transparent | No change |
| Defect | Fall short in front black | Change | Fall short of front transparent | Change |

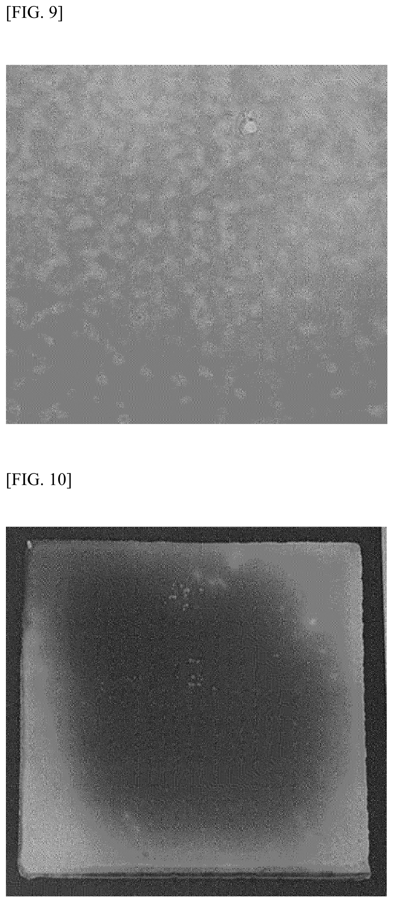

When the voltage is ON, the standard for the front black of the liquid crystal color means that the transmittance is 0.5% or less and the single transmittance color b* is within a range of -3 to 3, and when the voltage is OFF, the standard for the front transparent means that the transmittance is 20% or more. In addition, when observing the appearance, if any one or more changes are observed, such as amorphous black spot defect (see FIG. 8), liquid crystal spot defect (see FIG. 9), light leakage phenomenon (see FIG. 10), black spot defect, or white spot defect, it is indicated as 'changed', and if any one of the liquid crystal color and appearance change criteria according to whether the voltage is applied or not is not satisfied, it is judged as 'defective'.

Referring to the experimental data in Table 2 above, in the case of Production Example 3, where the ball spacers were mixed into the hard coating layer composition and dried and cured, it was observed that they were fixed on the hard coating layer with almost no detachment even under external impact, compared to Comparative Production Example 1, where the ball spacers were separately dispersed on the hard coating layer.

In addition, referring to the experimental data in Table 1 above, in the case of Examples 1 to 4 to which the transmittance variable optical laminate of the present disclosure is applied show the diameter (A) of the ball spacers of 3 to 14 µm, the thickness (B) of the hard coating layer having the ball spacers embedded therein of 1 to 10 µm, and the value of (A) - (B) of 2 to 10 µm, so that the liquid crystal color and appearance were evaluated to be excellent regardless of the voltage application state.

On the other hand, in the case of Comparative Examples 1 to 3 that do not satisfy one or more of the conditions of the diameter (A) of the ball spacers, the thickness (B) of the hard coating layer having the ball spacers embedded therein, and the value of (A)-(B), in the reliability drive evaluation, when the liquid crystal cell gap (A-B) becomes 1 µm or less, the transparent conductive layers at particularly narrow locations easily contact each other in the distance between the non-uniform transparent conductive layers, causing a current short circuit, resulting in black amorphous spots (see FIG. 8) being observed, and when the liquid crystal cell gap exceeds 10 µm, a light leakage phenomenon was observed depending on the viewing angle characteristics. In addition, when the hard coating thickness exceeds 10 µm, the surface irregularities due to the hard coating thickness deviation affected the liquid crystal gap, preventing a uniform liquid crystal thickness from being secured, resulting in the observation of a liquid crystal spot defect (see FIG. 9). In such a case, the appearance is not good, and the visibility and reliability of the optical laminate may deteriorate, such as when a light leakage phenomenon occurs.

For reference, Examples 6 and 7 satisfied the above conditions regarding the diameter (A) of the ball spacers, the thickness (B) of the hard coating layer having the ball spacers embedded therein, and the value of (A)-(B), but the thickness of the first alignment film was outside the range of 30 to 300 nm, and one or more criteria were observed to be defective in the reliability drive evaluation. In the case of Example 6, when the thickness of the first alignment film was less than 30 nm, a short circuit occurred between the transparent conductive layers, and black amorphous spots were observed (see FIG. 8), and in the case of Example 7, when the thickness of the first alignment film exceeded 300 nm, the liquid crystal color front black was not reached, resulting in the observation of liquid crystal spot defects (see FIG. 9) and afterimages during driving.

Therefore, it can be confirmed that the ball spacers are fixed to a hard coating layer, so the transmittance variable optical laminate according to the present disclosure has excellent cell gap maintenance characteristics of a liquid crystal, and conditions that the diameter (A) of the ball spacers is 3 to 14 µm, the thickness (B) of the hard coating layer having the ball spacers embedded therein is 1 to 10 µm, and the value of (A) - (B) is 2 to 10 µm are satisfied so that it is possible to secure a uniform liquid crystal layer, and the optical performance is excellent.

### [Industrial Applicability]

According to the transmittance variable optical laminate according to the present disclosure, the ball spacers are fixed in a form that they are embedded in the hard coating layer to minimize the movement of the ball spacers, thereby preventing damage to the laminate, and in particular, preventing damage to the alignment film due to the movement of the ball spacers to prevent the light leakage phenomenon between the liquid crystal layer and other laminate.

## Claims

1. A transmittance variable optical laminate comprising:
a first laminate in which a first polarizing plate including a first hard coating layer, a first transparent conductive layer, and a first alignment film are laminated in that order;
a second laminate in which a second polarizing plate including a second hard coating layer, a second transparent conductive layer, and a second alignment film are laminated in that order; and
a liquid crystal layer disposed between the first alignment film and the second alignment film,
wherein at least one transparent conductive layer of the first transparent conductive layer and the second transparent conductive layer is formed in direct contact with one polarizing plate of the first polarizing plate and the second polarizing plate, and includes ball spacers embedded in at least one hard coating layer of the first hard coating layer and the second hard coating layer so as to maintain a gap between layers existing above and below the liquid crystal layer,
the diameter (A) of the ball spacers is 3 to 14 µm, the hard coating layer having the ball spacers embedded therein of the first hard coating layer and the second hard coating layer has a thickness (B) of 1 to 10 µm, and (A)-(B) has a value of 2 to 10 µm.

2. The transmittance variable optical laminate of claim 1, wherein the first alignment film and the second alignment film each independently have a thickness of 30 to 300 nm.

3. The transmittance variable optical laminate of claim 1, wherein when each polarization axis of the first polarizing plate and the second polarizing plate is aligned at 0°, it is driven by a vertical alignment (VA) mode, and when each polarization axis of the first polarizing plate and the second polarizing plate is aligned at 90°, it is driven by a twisted nematic (TN) mode.

4. The transmittance variable optical laminate of claim 1, wherein the average embedding depth of the hard coating layer of the ball spacers exceeds 50% of the thickness of the hard coating layer.

5. The transmittance variable optical laminate of claim 1, wherein at least one transparent conductive layer of the first transparent conductive layer and the second transparent conductive layer is formed in direct contact with the polarizing plate by including a highly adhesive layer between the at least one transparent conductive layer and one polarizing plate of the first polarizing plate and the second polarizing plate.

6. The transmittance variable optical laminate of claim 1, wherein at least one polarizing plate of the first polarizing plate and the second polarizing plate includes one or more selected from the group consisting of a protective layer, a retardation matching layer, and a refractive index-matching layer.

7. The transmittance variable optical laminate of claim 1, wherein at least one polarizing plate of the first polarizing plate and the second polarizing plate has a thickness of 30 to 200 µm.

8. The transmittance variable optical laminate of claim 1, wherein the area occupied by the ball spacers in the liquid crystal layer is 0.01 to 10% of the area of the liquid crystal layer.

9. The transmittance variable optical laminate of claim 1, wherein the transmittance variable optical laminate further comprises one or more selected from the group consisting of a pressure sensitive adhesive/adhesive layer, an ultraviolet absorbing layer, and an impact resistant layer.

10. A method for producing the transmittance variable optical laminate of any one of claims 1 to 9.

11. A smart window comprising the transmittance variable optical laminate of any one of claims 1 to 9.

12. The smart window of claim 11, wherein the smart window has glass bonded onto one or both surfaces of the transmittance variable optical laminate.

13. A means of transportation comprising the smart window of claim 11.

14. An automobile, wherein the smart window of claim 11 is applied to at least one of a front window, a rear window, a side window, a sunroof window, and an internal partition.

15. A wearable device comprising the smart window of claim 11.

16. A building window comprising the smart window of claim 11.
